# EUROPÄISCHE PATENTSCHRIFT

(11) **EP 3 050 420 B1**
(45) Veröffentlichungstag und Bekanntmachung des Hinweises auf die Patenterteilung: **24.02.2021**
(21) Anmeldenummer: 16401005.0
(22) Anmeldetag: 18.01.2016
(51) Int. Cl.: A01C 7/12, A01C 19/00, A01C 7/10

(54) **VERTEILMASCHINE, INSBESONDERE SÄMASCHINE**
DISTRIBUTOR, IN PARTICULAR A SOWING MACHINE
MACHINE DE DISTRIBUTION, EN PARTICULIER SEMOIR

(30) Priorität: 28.01.2015 DE 102015101175
(43) Veröffentlichungstag der Anmeldung: 03.08.2016
(73) Patentinhaber: Amazonen-Werke H. Dreyer GmbH & Co. KG, 49205 Hasbergen (DE)
(72) Erfinder: Schröder, Olaf, 27798 Hude (DE)

(56) Entgegenhaltungen:
- EP-A1- 1 832 153
- DE-C- 350 067
- DE-U1- 9 214 315
- FR-A1- 2 527 418
- US-A- 883 006

## Beschreibung

Eine derartige Verteilmaschine ist in EP 1 832 153 A1 beschrieben. Diese Verteilmaschine ist als Sämaschine ausgebildet und weist einen Vorratsbehälter mit zugeordneten Dosiereinheiten auf. Die Dosiereinheiten weisen auf einer drehbar angetriebenen Säwelle angeordnete Säräder und zugeordnete Bodenklappen auf. Die Bodenklappen sind auf einer Bodenklappenwelle drehfest angeordnet. Die Bodenklappenwelle ist mittels Drehlager an der Sämaschine gelagert und über einen Betätigungshebel verdrehbar, so dass die Bodenklappen gemeinsam in ihrer Lage zu den Säräder einstellbar sind. Die Bodenklappenwelle erstreckt sich über die gesamte Breite der Sämaschine. Auf der Bodenklappenwelle sind sämtliche Bodenklappen angeordnet. Die Bodenklappenwelle ist auf der einen Seite der Sämaschine seitlich aus dieser herausgeführt, so dass an diesem herausgeführten Ende der Bodenklappenwelle der als Einstellhebel ausgebildete Betätigungshebel angeordnet ist. Aufgrund der relativ langen, sich über die gesamte Breite der Sämaschine erstreckenden Bodenklappenwelle tritt eine relativ große Torsion der Bodenklappenwelle auf, so dass die Ungenauigkeit der Einstellungsposition der Bodenklappen von dem Betätigungshebel bis zum anderen Ende der Bodenklappenwelle ständig zunimmt. Diese zunehmende Ungenauigkeit der Einstellung der Bodenklappen, je weiter sie von dem Betätigungshebel entfernt sind, ist unbefriedigend.

Diesem hat man in der Praxis dadurch abzuhelfen versucht, dass der Betätigungshebel nicht an einem Ende der Bodenklappenwelle angreift, sondern der Betätigungshebel etwa in der Mitte der Bodenklappenwelle an diesem drehfest angeordnet ist. Hierdurch wird die Torsion der Bodenklappenwelle durch die auf die Bodenklappen einwirkenden Kräfte erheblich reduziert und führt zu einer zu akzeptierenden Ungenauigkeit der Bodenklappeneinstellung. Nachteilig ist hierbei jedoch, dass die Einstellung der Bodenklappen nicht mehr von der Seite im bequemer Weise erfolgen kann, sondern der Bediener den in der Mitte der Maschine angeordneten und als Einstellhebel ausgebildeten Betätigungshebel durch übersteigen der nach hinten die Maschine überragenden Säschare oder sonstiger Maschinenteile nur schlecht erreichen kann.

Der Erfindung liegt die Aufgabe zu Grunde, eine verbesserte Ausgestaltung der Einstellung und Anordnung für die Bodenklappeneinstellung zu schaffen.

Diese Aufgabe wird erfindungsgemäß durch das Kennzeichen des Anspruches 1 gelöst.

Infolge dieser Maßnahmen greift der Betätigungshebel etwa in der Mitte der Länge der Bodenklappenwelle an, wodurch die Kräfte in vorteilhafterweise von der Mitte aus in die Bodenklappenwelle zu deren Verstellung und Einstellung der Bodenklappen eingeleitet werden und somit sich nur eine geringe Torsion im Gegensatz zu der Krafteinleitung von einem Ende der Bodenklappenwelle ergibt. Weiterhin lassen sich unter Beibehaltung dieser geringen Torsion der Bodenklappenwelle durch die vorbeschriebene Anordnung des seitlich der Maschine angeordneten Einstellhebels über die mit der Bodenklappenwelle in Wirkverbindung stehende Einstellwelle im vorteilhafterweise von einer Seite der Maschine aus im bequemer Weise die Bodenklappen einstellen. Es wird also gleichzeitig eine gute Erreichbarkeit der Einstellung der Bodenklappen und eine geringe Torsion Belastung der Bodenklappenwelle erreicht.

Eine einfache Wirkverbindung zwischen der Einstellwelle und der Bodenklappenwelle lässt sich dadurch umsetzen, dass zwischen dem Übertragungshebel und dem Betätigungshebel eine Stellstange angeordnet ist, dass der Übertragungshebel und dem Betätigungshebel über die Stellstange gelenkig miteinander verbunden sind.

Eine vorteilhafte Ausgestaltung der Wirkverbindung zwischen der Einstellwelle und der Bodenklappenwelle zu der Einstellung der Bodenklappen lässt sich dadurch erreichen, dass das eine Ende der Stellstange mit einem Gelenk an dem Übertragungshebel und das andere Ende der Stellstange mit einem Gelenk an dem Betätigungshebel angeordnet ist.

Die Einstellung der Bodenklappen kann in einfacher Weise dadurch erfolgen, dass Stellelement als Handhebel oder als an das Stellelement angreifenden Aktor ausgebildet ist.

Damit in dem häufigsten und sensibelsten Einstellungsbereich der Bodenklappen keine oder keine allzu großen Drehmomente auf die Einstellwelle sowie in den Übertragungsgliedern zwischen der Einstellwelle und der Bodenklappenwelle entstehen, ist vorgesehen, dass die Gelenkachse des den Übertragungshebel und die Stellstange verbindende Gelenk zumindest annähernd auf einer die Drehachse der Einstellwelle, um welche der Übertragungshebel verschwenkbar und die Einstellwelle verdrehbar sind, und das die Stellstange mit dem Betätigungshebel verbindende Gelenk verbindenden Geraden liegt, wenn die Bodenklappen mit den zumindest annähernd im Säbetrieb geringsten Abstand zu den zugeordneten Särädern eingestellt sind. Infolge dieser Maßnahmen treten keine oder keine nennenswerten Torsionskräfte in der Einstellwelle und/oder Bodenklappenwelle auf. Der häufigste und sensibelste Einstellungsbereich der Bodenklappe ist im Säbetrieb der geringste einzustellende Abstand zwischen den Säräder und der Bodenklappe. Somit werden Schwingungen in den Einstellgliedern für die Bodenklappeneinstellung vermieden. Es werden so auch Aussaatfehler vermieden. Im Idealfall wird eine Totpunktlage für das Gelenk zwischen Übertragungshebel und Stellstange angestrebt.

Die Vorteile der mittig in die Bodenklappenwelle in erfindungsgemäßer Weise eingeleiteten Stellkräfte sind für eine ausreichend genaue Einstellung der Bodenklappen entscheidend.

Weitere Einzelheiten der Erfindung sind der Beispielsbeschreibung und den Zeichnungen zu entnehmen. Die Zeichnungen zeigen
- Fig.1: der Saatgutbehälter der Sämaschine mit Dosiereinrichtungen in Teilansicht, in Prinzipdarstellung und in perspektivischer Ansicht schräg von hinten,
- Fig.2: der untere Bereich des Saatgutbehälters gemäß Fig.1 in ausschnittsweiser Darstellung, in Prinzipdarstellung, in Seitenansicht und in vergrößertem Maßstab, wobei sich die Bodenklappe mit einem geringen Abstand zum Särad und die Umlenkklappe jeweils in Säposition befinden,
- Fig.3: die sich in Säposition gemäß Fig.2 befindliche Bodenklappe mit einem geringen Abstand zum Särad und die Umlenkklappe vergrößertem Maßstab, in Prinzipdarstellung und Seitenanssicht,
- Fig.4: die Gestängeanordnung zur Einstellung der Bodenklappen in die Einstellung gemäß den Fig. 2 und 3 in perspektivischer Ansicht,
- Fig.5: der untere Bereich des Saatgutbehälters gemäß Fig.1 in ausschnittsweiser Darstellung, in Prinzipdarstellung, in Seitenansicht und in vergrößertem Maßstab, wobei sich die Bodenklappe mit einem großen Abstand zum Särad und die Umlenkklappe jeweils in Entleerungsposition zum Entleeren des Saatgutbehälters befinden,
- Fig.6: die sich in Säposition gemäß Fig.5 befindliche Bodenklappe mit einem geringen Abstand zum Särad und die Umlenkklappe vergrößertem Maßstab, in Prinzipdarstellung und Seitenanssicht und
- Fig.7: die Gestängeanordnung zur Einstellung der Bodenklappen in die Einstellung gemäß den Fig. 5 und 6 in perspektivischer Ansicht.

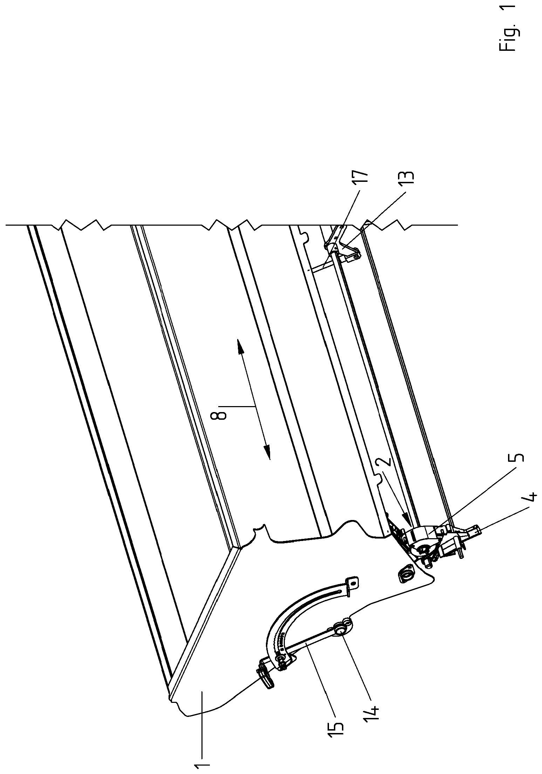

Die als Sämaschine ausgebildete Verteilmaschine weist den lang gestreckten und als Saatgutbehälter 1 ausgebildeten Vorratsbehälter auf. Der Saatgutbehälter 1 ist in bekannter und daher nicht näher dargestellter Weise auf einem Rahmen mit Laufrädern oder in geeigneter Weise auf einem Bodenbearbeitungsgerät aufgebaut. In Seitenansicht gesehen ist der Saatgutbehälter 1 zumindest in seinem unteren Bereich trichterförmig ausgebildet. In dem unteren Bereich des Saatgutbehälters 1 sind nebeneinander und beabstandet zueinander eine Anzahl von Auslassöffnungen angeordnet. Jeder Auslassöffnung ist eine als Dosierelemente ausgebildete Dosiereinrichtung 2 zugeordnet. Mittels der Dosiereinrichtungen 2, die Säräder 3 aufweisen, wird das Saatgut in bekannter Weise dosiert und Saatleitungen 4 zugeleitet. Von den Dosiereinrichtungen führen Saatleitungen 2 zu Ausbringelementen, um das dosierte Saatgut im Boden abzulegen. An dieser Stelle sei darauf hingewiesen, dass in den Zeichnungen aus Vereinfachungsgründen nur einige der Dosiereinrichtungen 2 der Sämaschine dargestellt sind. Selbst verständlich sind bei einer einsatzfähigen Maschine über die gesamte Breite des Saatgutbehälters 1 gleichmäßig verteilt, wie auf Fig.1 auf der linken Seite angedeutet, die Dosiereinrichtungen 2 mit den zugeordneten Saatleitungen 3 angeordnet.

Die Säräder 3 befinden sich zwischen den aufrechten Wandlungen des Sägehäuses 5 und sind auf der rotierend angetriebenen Säwelle 6 angeordnet. Unterhalb der Säräder 3 ist jeweils in dem Sägehäuse 5 eine Bodenklappe 7 auf der sich in Längsrichtung 8 des Saatgutbehälters 1 erstreckenden und mittels Drehlager 9 schwenkbar angeordneten Bodenklappenwelle 10. Die Bodenklappen 7 sind jeweils drehfest auf der Bodenklappenwelle 10 angeordnet. Die Bodenklappenwelle 10 erstreckt sich parallel zu der Säwelle 6.

Die Bodenklappenwelle 10 weist eine Länge 11 auf. Auf halber Länge 12 der Bodenklappenwelle 10 ist an der Bodenklappenwelle 10 zur Einstellung des Abstandes der Bodenklappen 7 zu dem Umfang der Säräder 3 ein Betätigungshebel 13 drehfest angeordnet.

Parallel zu der Bodenklappenwelle 10 verlaufend ist an dem Rahmen der Sämaschine bzw. dem Saatgutbehälter 1 eine Einstellwelle 14 drehfest gelagert angeordnet. Die Einstellwelle 14 erstreckt sich von der linken Seite der Sämaschine bis zur Mitte der Sämaschine und zwar bis zu dem Bereich, an dem der Betätigungshebel 13, der an der Bodenklappenwelle 10 angeordnet ist. An dem einen Ende der Einstellwelle 14 ist ein als Einstellhebel 15 ausgebildetes ein Stellelement seitlich an der Sämaschine angeordnet. Beabstandet zu dem Einstellhebel 15 ist an dem anderen Ende der Einstellwelle 14 ein Übertragungshebel 16 drehfest angeordnet. An dem Ende des Übertragungshebels 16 ist eine Stellstange 17 mittels eines Gelenkes 18 angeordnet. Das andere Ende der Stellstange 17 ist an dem Betätigungshebel 13 ebenfalls mittels eines Gelenkes 19 angeordnet. Somit ist zwischen dem Übertragungshebel 16 und dem Betätigungshebel 13 eine vorzugsweise einstellbare Stellstange 17angeordnet. Somit sind Übertragungshebel 16 und Betätigungshebel 13 über die Stellstange 17 gelenkig miteinander verbunden.

Der Einstellhebel 15 ist im Ausführungsbeispiel als Handhebel ausgebildet. Es ist auch möglich, den Einstellhebel 15 einen motorischen Aktor, über den die Einstellwelle 14 verdrehbar und somit fernbedienbar die Bodenklappen 7 einzustellen sind, zuzuordnen.

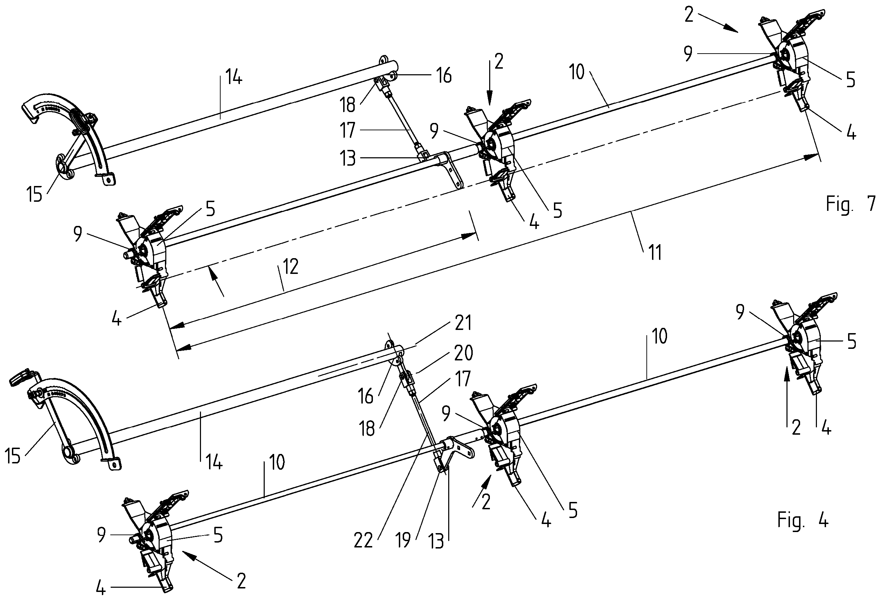

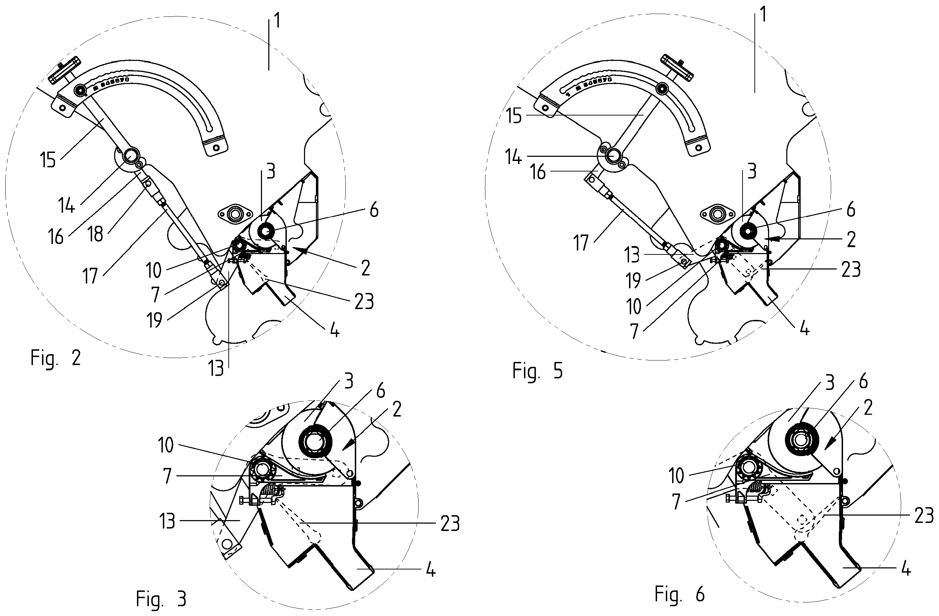

Damit in dem häufigsten und sensibelsten Einstellungsbereich der Bodenklappen 7 keine oder keine allzu großen Drehmomente auf die Einstellwelle 14 sowie in den Übertragungsgliedern zwischen der Einstellwelle 10 und der Bodenklappenwelle 10 entstehen, ist vorgesehen, dass die Gelenkachse 20 des den Übertragungshebel 16 und die Stellstange 17 verbindenden Gelenkes 18 zumindest annähernd auf einer die Drehachse 21 der Einstellwelle 14, um welche der Übertragungshebel 16 verschwenkbar und die Einstellwelle 14 verdrehbar sind, und das die Stellstange 17 mit dem Betätigungshebel 13 verbindende Gelenk 19 verbindenden Geraden 22 liegt, wenn die Bodenklappen 7 mit den zumindest annähernd im Säbetrieb geringsten Abstand zu den zugeordneten Särädern 3 eingestellt sind, wie die Fig.2-4 zeigen. Infolge dieser Maßnahmen treten keine oder keine nennenswerten Torsionskräfte in der Einstellwelle 14 und Bodenklappenwelle 10 auf. Der häufigste und sensibelste Einstellungsbereich der Bodenklappe 7 ist im selben Betrieb der geringste einzustellende Abstand zwischen den Säräder 3 und der Bodenklappe 7, wie in den Figuren 2-4 dargestellt ist. Somit werden Schwingungen in den Einstellgliedern für die Bodenklappeneinstellung vermieden. Es werden so auch Aussaatfehler vermieden. Im Idealfall wird eine Totpunktlage für das Gelenk 18 zwischen Übertragungshebel 16 und Stellstange zählen angestrebt.

In den Fig.5-7 ist dargestellt, wenn die Bodenklappen 7 über den Handhebel 15, die Einstellwelle 14, die Übertragungsglieder 16, 17, 19 und 13 verschwenkt sind, so dass die Bodenklappen 7 sich ein einem großen Abstand zu den zugeordneten Särädern 3 befinden, damit das sich noch in dem Saatgutbehälter 1 befindliche Restsaatgut aus dem Vorratsbehälter entleert werden kann. Bevor die Bodenklappen 7 in diese Position gemäß den Fig. 5-7 verschwenkt wird, werden noch die Leitklappen 23 aus der in den Fig.2-3 dargestellten Position in die in den Fig.5-6 dargestellten Position verschwenkt.

## Patentansprüche

1. Verteilmaschine, insbesondere Sämaschine mit einem Vorratsbehälter (1) und einer Dosiereinrichtung (2), die aus mehreren beabstandet zueinander angeordneten Dosiereinheiten (2) besteht, die auf einer drehbar angetriebenen Säwelle (6) angeordnet und zwischen zwei aufrechten Wandungen eines Sägehäuses (5) befindliche Säräder (3) sowie auf einer verdrehbar gelagerten Bodenklappenwelle (10) angeordnete und den Särädern (3) zugeordnete Bodenklappen (7) aufweist, wobei ein Betätigungshebel (13) drehfest an der Bodenklappenwelle (10) zur Einstellung des Abstandes der Bodenklappen (7) zu dem Umfang der Säräder (3) angreift, **dadurch gekennzeichnet, dass** der Betätigungshebel (13) zumindest annähernd auf halber Länge (12) der Länge (11) der Bodenklappenwelle (10) angreift, und dass parallel zu der Bodenklappenwelle (10) verlaufend eine verdrehbar gelagerte Einstellwelle (14) angeordnet ist, dass dem einen Ende der Einstellwelle (14) ein vorzugsweise als Einstellhebel (15) ausgebildetes Einstellelement seitlich an der Sämaschine angeordnet ist, dass beabstandet zu dem Einstellhebel (15) an der Einstellwelle (14), die sich von dem an der Bodenklappenwelle (10) befestigten Betätigungshebel (13) bis seitlich außerhalb der Sämaschine erstreckt, ein Übertragungshebel (16) angeordnet ist, dass der Übertragungshebel (16) mit dem Betätigungshebel (13) in Wirkverbindung steht.

2. Verteilmaschine nach Anspruch 1, **dadurch gekennzeichnet, dass** zwischen dem Übertragungshebel (16) und dem Betätigungshebel (13) eine Stellstange (17) angeordnet ist, dass der Übertragungshebel (16) und dem Betätigungshebel (13) über die Stellstange (17) gelenkig miteinander verbunden sind.

3. Verteilmaschine nach zumindest einem der vorstehenden Ansprüche, **dadurch gekennzeichnet, dass** das eine Ende der Stellstange (17) mit einem Gelenk (18) an dem Übertragungshebel (16) und das andere Ende der Stellstange (17) mit einem Gelenk (19) an dem Betätigungshebel (13) angeordnet ist.

4. Verteilmaschine nach zumindest einem der vorstehenden Ansprüche, **dadurch gekennzeichnet, dass** Stellelement (15) als Handhebel oder als an das Stellelement angreifenden Aktor ausgebildet ist.

5. Verteilmaschine nach zumindest einem der vorstehenden Ansprüche, **dadurch gekennzeichnet, dass** die Gelenkachse (20) des den Übertragungshebel (16) und die Stellstange (17) verbindende Gelenk (18) zumindest annähernd auf einer die Drehachse (21) der Einstellwelle (14), um welche der Übertragungshebel (16) verschwenkbar und die Einstellwelle (14) verdrehbar sind, und das die Stellstange (17) mit dem Betätigungshebel (13) verbindende Gelenk (19) verbindenden Geraden (22) liegt, wenn die Bodenklappen (7) mit den zumindest annähernd im Säbetrieb geringsten Abstand zu den zugeordneten Särädern (3) eingestellt sind.

## Claims

1. Distributor, in particular sowing machine with a storage container (1) and a metering device (2) which consists of a plurality of spaced-apart metering units (2) and which is arranged on a rotatably driven sowing shaft (6) and has sowing wheels (3) located between two upright walls of a sowing housing (5) and floor flaps (7) which are arranged on a rotatably mounted floor flap shaft (10) and are assigned to the sowing wheels (3), wherein an actuating lever (13) acts on the floor flap shaft (10) for rotation therewith in order to adjust the distance of the floor flaps (7) with respect to the circumference of the sowing wheels (3), **characterized in that** the actuating lever (13) acts at least approximately over half the length (12) of the length (11) of the floor flap shaft (10), and **in that** a rotatably mounted adjustment shaft (14) is arranged running parallel to the floor flap shaft (10), **in that**, at the one end of the adjustment shaft (14), an adjustment element preferably in the form of an adjustment lever (15) is arranged laterally on the sowing machine, **in that** a transmission lever (16) is arranged spaced apart from the adjustment lever (15) on the adjustment shaft (14), which extends from the actuating lever (13) fastened to the floor flap shaft (10) to laterally outside the sowing machine, and **in that** the transmission lever (16) is operatively connected to the actuating lever (13).

2. Distributor according to Claim 1, **characterized in that** a positioning rod (17) is arranged between the transmission lever (16) and the actuating lever (13), **in that** the transmission lever (16) and the actuating lever (13) are connected to each other in an articulated manner via the positioning rod (17).

3. Distributor according to at least one of the preceding claims, **characterized in that** the one end of the positioning rod (17) is arranged with a joint (18) on the transmission lever (16) and the other end of the positioning rod (17) is arranged with a joint (19) on the actuating lever (13).

4. Distributor according to at least one of the preceding claims, **characterized in that** the adjustment element (15) is in the form of a hand lever or an actuator acting on the adjustment element.

5. Distributor according to at least one of the preceding claims, **characterized in that** the joint axis (20) of the joint (18) connecting the transmission lever (16) and the positioning rod (17) lies at least approximately on a straight line (22) connecting the axis of rotation (21) of the adjustment shaft (14), about which axis of rotation the transmission lever (16) is pivotable and the adjustment shaft (14) is rotatable, and the joint (19) connecting the positioning rod (17) to the actuating lever (13) when the floor flaps (7) are adjusted with the at least approximately smallest distance in the sowing mode from the associated sowing wheels (3).

## Revendications

1. Machine de distribution, notamment semoir, munie d'un contenant de stockage (1) et d'un appareil de dosage (2), qui est constitué par plusieurs unités de dosage (2) agencées à un écart les unes des autres, qui comprend des roues de semis (3) agencées sur un arbre de semis (6) entraîné en rotation et se trouvant entre deux parois verticales d'un boîtier de semis (5), ainsi que des clapets de fond (7) agencés sur un arbre de clapets de fond monté rotatif (10) et associés aux roues de semis (3), un levier d'actionnement (13) agissant de manière immobile en rotation sur l'arbre de clapets de fond (10) pour l'ajustement de l'écartement des clapets de fond (7) par rapport à la périphérie des roues de semis (3), **caractérisée en ce que** le levier d'actionnement (13) agit au moins approximativement sur une demi-longueur (12) de la longueur (11) de l'arbre de clapets de fond (10), et **en ce qu'**un arbre d'ajustement monté rotatif (14) est agencé parallèlement à l'arbre de clapets de fond (10), **en ce qu'**un élément d'ajustement de préférence configuré sous la forme d'un levier d'ajustement (15) est agencé latéralement sur le semoir à une extrémité de l'arbre d'ajustement (14), **en ce qu'**un levier de transmission (16) est agencé à un écart du levier d'ajustement (15) sur l'arbre d'ajustement (14), qui s'étend depuis le levier d'actionnement (13) fixé sur l'arbre de clapets de fond (10) jusqu'à latéralement à l'extérieur du semoir, **en ce que** le levier de transmission (16) se trouve en liaison fonctionnelle avec le levier d'actionnement (13).

2. Machine de distribution selon la revendication 1, **caractérisée en ce qu'**une tringle de réglage (17) est agencée entre le levier de transmission (16) et le levier d'actionnement (13), **en ce que** le levier de transmission (16) et le levier d'actionnement (13) sont reliés l'un avec l'autre de manière articulée par l'intermédiaire de la tringle de réglage (17).

3. Machine de distribution selon au moins l'une quelconque des revendications précédentes, **caractérisée en ce qu'**une extrémité de la tringle de réglage (17) est agencée avec une articulation (18) sur le levier de transmission (16) et l'autre extrémité de la tringle de réglage (17) est agencée avec une articulation (19) sur le levier d'actionnement (13).

4. Machine de distribution selon au moins l'une quelconque des revendications précédentes, **caractérisée en ce que** l'élément de réglage (15) est configuré sous la forme d'un levier manuel ou sous la forme d'un actionneur agissant sur l'élément de réglage.

5. Machine de distribution selon au moins l'une quelconque des revendications précédentes, **caractérisée en ce que** l'axe d'articulation (20) de l'articulation (18) reliant le levier de transmission (16) et la tringle de réglage (17) se situe au moins approximativement sur une droite (22) reliant l'axe de rotation (21) de l'arbre d'ajustement (14), autour duquel le levier de transmission (16) est apte à pivoter et l'arbre d'ajustement (14) est apte à tourner, et l'articulation (19) reliant la tringle de réglage (17) avec le levier d'actionnement (13), lorsque les clapets de fond (7) sont ajustés avec l'écartement au moins approximativement le plus petit dans l'opération de semis par rapport aux roues de semis associées (3).
